# EUROPEAN PATENT SPECIFICATION

(11) **EP 4 422 213 B1**
(45) Date of publication and mention of the grant of the patent: **16.04.2025**
(21) Application number: 23158123.2
(22) Date of filing: 23.02.2023
(51) Int. Cl.: H04R 29/00, G01H 3/00, B06B 1/06, G08B 13/196

(54) **METHOD AND DEVICE FOR DETERMINING A MICROPHONE STATUS**
VERFAHREN UND VORRICHTUNG ZUR BESTIMMUNG EINES MIKROFONSTATUS
PROCÉDÉ ET DISPOSITIF DE DÉTERMINATION DE L'ÉTAT D'UN MICROPHONE

(43) Date of publication of application: 28.08.2024
(73) Proprietor: Axis AB, 223 69 Lund (SE)
(72) Inventor: Dunér, Henrik, 223 69 LUND (SE); Dunér, Susanne, 223 69 LUND (SE)
(74) Representative: AWA Sweden AB

(56) References cited:
- US-A1- 2020 245 086
- US-A1- 2020 329 324
- US-A1- 2022 070 600

## Description

### Technical field

The present invention relates to determining an operational status of a microphone in a device and a device configured to perform such determination.

### Background

Electronic devices that are configured to register sound waves and provide electric signals that represent the registered sound waves are necessarily equipped with a microphone and associated analogue and digital circuitry configured to process and transmit these signals. For some types of such devices, it is imperative that the microphone is fully operational and that an operator or user of the device is able to ascertain himself or herself of the operational status. For example, one type of such a device is a device for surveillance. Such a device for surveillance may, e.g., be a surveillance camera. A surveillance camera is typically equipped with a microphone for obtaining audio information associated with video information registered by the surveillance camera as well as obtaining audio information that is not associated with any video information.

US 2022/070600 A1 shows a method for detecting a microphone condition, which involves comparing an electrical response to an expected response and determining the microphone condition based on the comparison.

### Summary of the invention

According to a first aspect there is provided a method for determining a status of a microphone according to claim 1.

Thus, by providing a predetermined impulse waveform to a piezoelectric component close to the microphone and in mechanical connection with the microphone, the microphone will receive a mechanical impulse from the piezoelectric component that will result in a relative movement between a membrane within the microphone and an encapsulating part of the microphone. Hence, by triggering the piezoelectric component to emit a mechanical impulse, i.e. to undergo a change in spatial extension according to the received impulse waveform, the microphone will register this as a relative movement between the membrane within the microphone and an encapsulating part of the microphone. As a consequence of this relative movement, the microphone will create a response signal in the same way as if the membrane was displaced relative the encapsulating part by a sound wave, but without any generation of sound that may be an audible disturbance from the point of hearing of an outside observer. Such a method enables an operator to obtain an operational status at any time and with any desired regularity without generating undesirable noise.

The determination whether a response signal waveform from the microphone corresponds to the predetermined impulse waveform may comprise determining that a timing difference between the response signal waveform and the predetermined impulse waveform is within a predetermined timing difference interval. Such a determination is simple. Further it allows for a more or less deteriorated response signal waveform to be used in the determination.

Alternatively, or in combination, the predetermined impulse waveform may comprise an encoded pattern. In such a case, the determination whether a response signal waveform from the microphone corresponds to the predetermined impulse waveform may comprise determining that the response signal waveform comprises the encoded pattern. By utilizing a waveform with an encoded pattern that is more or less complex, a more reliable determination is possible in that spurious signals that may be mistaken for a response from the microphone may be disregarded.

The encoded pattern may be a sequence of a predetermined number of impulses delimited by a respective predetermined time interval.

While registering an audio signal from the microphone and while providing the audio signal to an audio signal receiver, prior to transmitting the predetermined impulse waveform to the piezoelectric component, provision of a temporary replacement audio signal is initiated, and after the determination whether a response signal waveform from the microphone corresponds to the predetermined impulse waveform, the provision of the audio signal to the audio signal receiver is resumed.

In other words, by replacing the audio signal, during a time period when the piezoelectric component emits a mechanical impulse, with a replacement audio signal it is possible to prevent a response signal waveform corresponding to the mechanical impulse from reaching the audio signal receiver and thereby prevent the audio signal receiver from generating potentially undesired "clicking" noise. For example, the temporary replacement audio signal may be in the form of a computed extrapolation or interpolation of the audio signal provided to the audio signal receiver prior to the initiation of provision of the temporary replacement audio signal. In another example, the temporary replacement audio signal may be a difference audio signal computed by subtracting a predetermined response signal waveform from the response signal waveform from the microphone.

According to a second aspect, a non-transitory computer-readable storage medium is provided. The non-transitory computer-readable storage medium has stored thereon instructions for implementing the method according to the first aspect when executed on a device having processing capabilities.

According to a third aspect, a device is provided as in claim 9.

The device may comprise a printed circuit board (PCB) and the microphone and the piezoelectric component may both be attached to the PCB in the vicinity of each other.

As for the method according to the first aspect, such a device is advantageous in that it, i.a., enables an operator to obtain an operational status of the microphone at any time and with any desired regularity without generating undesirable noise.

Furthermore, the piezoelectric component may be any of a multi-layer ceramic capacitor, (MLCC), and a piezoelectric actuator made of lead zirconate titanate (PZT).

An MLCC is advantageous in more than one way. For example, an MLCC is an extremely simple construction and thereby very cheap; it is also very reliable over a long period of time and it is therefore a safe choice when implementing the present functionality in a microphone equipped device that is to be monitored over long time periods.

### Brief description of the drawings

The above and other aspects of the present invention will now be described in more detail, with reference to appended figures. The figures should not be considered limiting; instead, they are used for explaining and understanding. Like reference numerals refer to like elements throughout.
Figure 1 schematically illustrates a device comprising a microphone,
figure 2 is a flowchart of a method,
figure 3a schematically illustrates an impulse waveform,
figure 3b schematically illustrates a response signal associated with the impulse waveform illustrated in figure 3a,
figure 4a schematically illustrates an impulse waveform, and
figure 4b schematically illustrates a response signal associated with the impulse waveform illustrated in figure 4a.

### Detailed description

The present invention will now be described more fully hereinafter with reference to the accompanying drawings, in which currently preferred embodiments of the invention are shown.

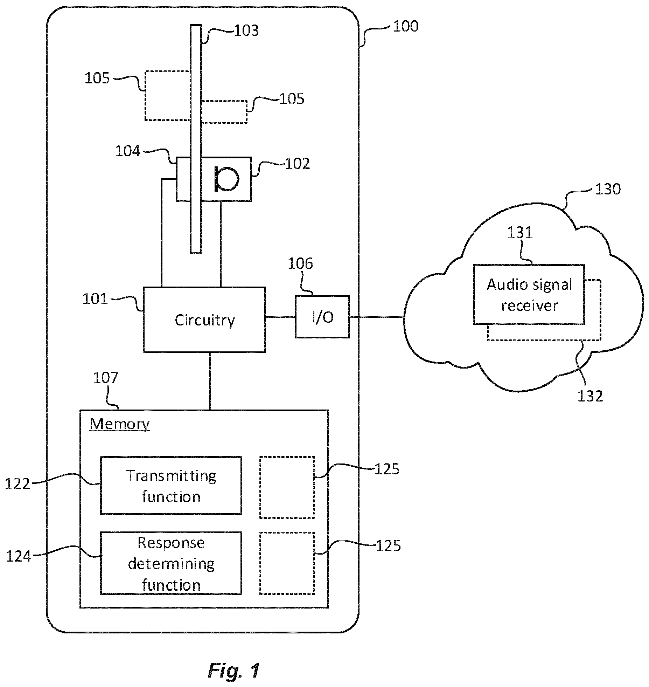

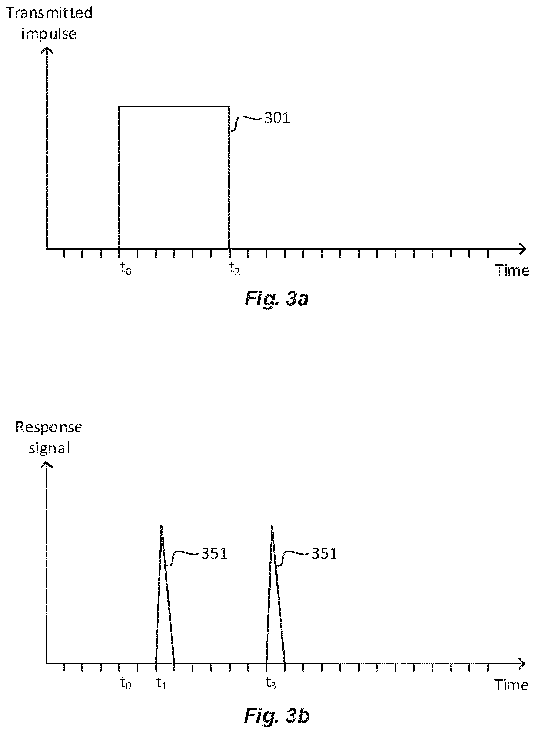

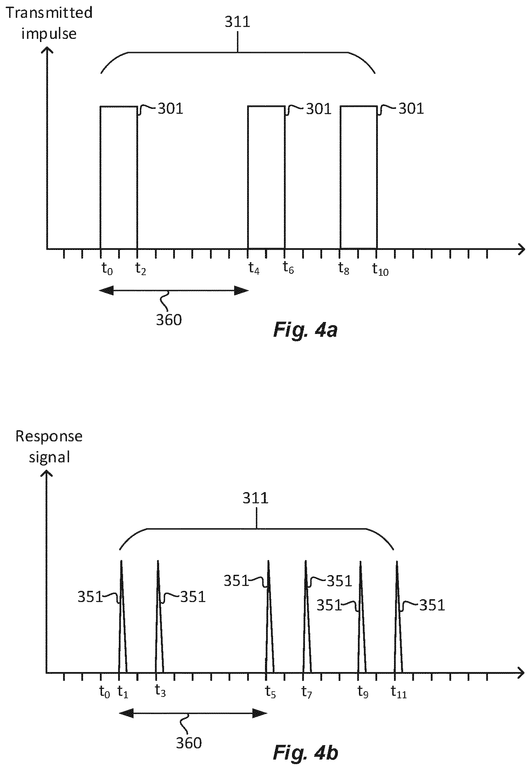

Reference will now be made to figure 1, which schematically illustrates a device 100 and figures 3a-b and figures 4a-b that exemplify a respective impulse waveform 301 and a respective corresponding response signal 351.

The device 100 comprises circuitry 101, a microphone 102 and a piezoelectric component 104. The piezoelectric component 104 and the microphone 102 are located in a vicinity of each other and arranged in mechanical connection with each other. The circuitry 101 is connected to the microphone 102. The circuitry 101 is connected to the piezoelectric component 104. Further electronic components 105 are indicated as being part of the device 100. These further electronic components 105 may for example comprise circuits and other means, such as imaging circuitry and a lens system for realizing a surveillance camera.

Communication between the circuitry 101 of the device 100 and external entities is realized via input/output circuitry 106. For example, communication may be realized between the circuitry 101 and a network 130 in which an audio signal receiver 131 and other communicating entities 132 are interconnected. For example, the device 100 may be a network surveillance camera connected to the internet, i.e. network 130, operated by an operator or user computer system, i.e. entity 132, and wherein the audio signal receiver 131 forms part of such an operator or user computer system.

The circuitry 101 of the device 100 is configured to carry out overall control of functions and operations of the device 100. The circuitry 101 may include a processor, such as a central processing unit (CPU), microcontroller, or microprocessor. The processor is configured to execute program code stored in a memory 107 in order to carry out functions and operations of the device 100.

The memory 107 may be one or more of a buffer, a flash memory, a hard drive, a removable medium, a volatile memory, a non-volatile memory, a random access memory (RAM), or another suitable device. In a typical arrangement, the memory 107 may include a non-volatile memory for long term data storage and a volatile memory that functions as system memory for the circuitry 101. The memory 107 may exchange data with the circuitry 101 over a data bus. Accompanying control lines and an address bus between the memory 107 and the circuitry 101 also may be present.

Functions and operations of the device 100 may be embodied in the form of executable logic routines (e.g., lines of code, software programs, etc.) that are stored on a non-transitory computer readable medium (e.g., the memory 107) of the device 100 and are executed by the circuitry 101 (e.g., using the processor). Furthermore, the functions and operations of the device 100 may be a stand-alone software application or form a part of a software application that carries out additional tasks related to the device 100. The described functions and operations may be considered a method that the corresponding part of the device is configured to carry out. Also, while the described functions and operations may be implemented in software, such functionality may as well be carried out via dedicated hardware or firmware, or some combination of hardware, firmware and/or software.

The circuitry 101 is configured to execute a transmitting function 122. The transmitting function 122 is configured to transmit a predetermined impulse waveform 301 to the piezoelectric component 104 to induce a mechanical impulse in the piezoelectric component 104. Hence, the impulse inducing function 122 is configured to induce the piezoelectric component 104 to undergo a change in spatial extension or vibrate according to the received impulse waveform. The change in spatial extension or vibration may have characteristics that may vary based on the mechanical properties of the context wherein the piezoelectric component 104 and the microphone 102 are arranged.

Figure 3a illustrates an example where the predetermined impulse waveform 301 is in the form of a square wave having a leading edge at time t₀ and a trailing edge at time t₂. The piezoelectric component 104 reacts to the predetermined impulse waveform 301 in that it undergoes a change in spatial extension as a reaction to the leading edge and as a reaction to the trailing edge of the predetermined impulse waveform 301. The microphone 102 responds by creating the response signal waveform 351 that is schematically illustrated by a respective waveform peak at time t₁ and at time t₃. The points in time t₁ and t₃ are shifted in relation to the points in time t₀ and t₂ as a consequence of the mechanical and electronic characteristics of the components involved.

The circuitry 101 is further configured to execute a response determining function 124. The response determining function 124 is configured to determine whether the response signal waveform 351 from the microphone 102 corresponds to the predetermined impulse waveform 301. Upon the response signal waveform 351 from the microphone 102 corresponding to the predetermined impulse waveform 301, the response determining function 124 is configured to determine that the status of the microphone 102 is operational. For example, referring to figures 3a and 3b, a positive correspondence may be determined in a case where a time difference t₃-t₁ is, within a reasonable error of margin, equal to a time difference t₂-t₀.

As exemplified in figure 1, the device may comprise a PCB 103 to which the microphone 102 and the piezoelectric component 104 are attached. It is noted that the microphone 102 and the piezoelectric component 104 are located in vicinity to each other. Preferably, the microphone 102 and the piezoelectric component 104 are both arranged on the PCB 103 such that they are in direct mechanical contact with each other. This enables efficient transfer of the induced mechanical impulse in the piezoelectric component 104 to the microphone 102. The microphone 102 comprises a housing, attached to the PCB 102, and a membrane arranged within the housing. The attachment between the microphone housing and the PCB 102 may for example be in the form of solder, glue or by means of appropriate mechanical attachment means. Transfer of the induced mechanical impulse takes place from the piezoelectric component 104, which has performed a spatial expansion followed by a spatial contraction as a response to the predetermined impulse waveform 301 from the transmitting function 122, via the PCB 102 to the housing of the microphone 102. A relative movement is thereby created between the membrane of the microphone 102 and the housing of the microphone 102, resulting in the response signal 351 from the microphone 102 being determined by the response determining function 124.

The piezoelectric component 104 may be a multi-layer ceramic capacitor (MLCC). However, other types of piezoelectric arrangements may be used. For example, a piezoelectric actuator made of, e.g., lead zirconate titanate (PZT).

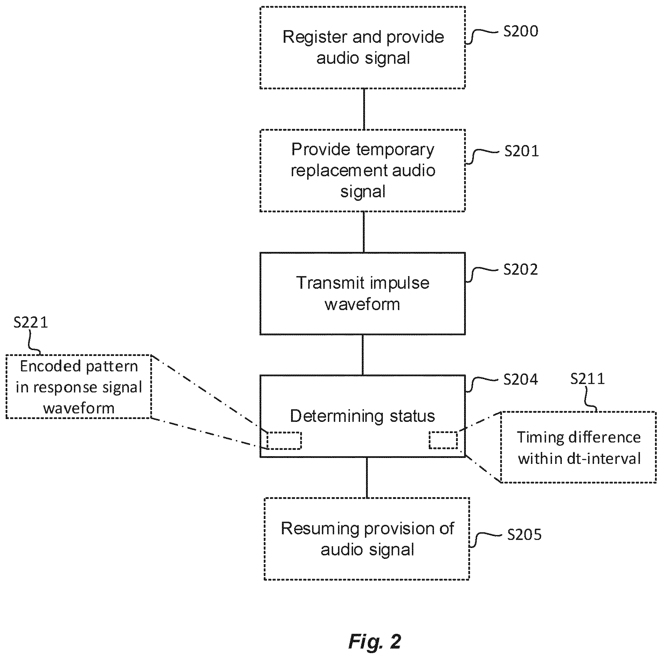

Turning now to figure 2, and with continued reference to figure 1, figures 3a-b and figures 4a-b, a method for determining a status of a microphone 102 will be described. Some or all the steps of the method may be performed by the device 100 described above. However, it is equally realized that some or all of the steps of the method may be performed by one or more other devices having similar functionality. The method is typically executed by the circuitry 101. However, it is to be appreciated that interaction may take place during execution with the operator or user computer system in the network 130 connected to the device 100 via the input/output circuitry 106. The method comprises the following steps. The steps may be performed in any suitable order.

A transmitting step S202 comprises transmitting a predetermined impulse waveform 301 to a piezoelectric component 104, the piezoelectric component 104 being located in a vicinity of the microphone 102 and arranged in mechanical connection with the microphone 102, to induce a mechanical impulse in the piezoelectric component 104.

A determining step S204 comprises determining whether a response signal waveform 351 from the microphone 102 corresponds to the predetermined impulse waveform 301, and upon the response signal waveform 351 from the microphone 102 corresponding to the predetermined impulse waveform 301, determining that the status of the microphone 102 is operational.

In the determining step S204, the determining whether a response signal waveform 351 from the microphone 102 corresponds to the predetermined impulse waveform 301 may comprise, in a determining step 211, determining that a timing difference between the response signal waveform 351 and the predetermined impulse waveform 301 is within a predetermined timing difference interval.

As figure 3a illustrates, and as discussed above in connection with figure 1, the predetermined impulse waveform 301 may be in the form of a square wave having a leading edge at time t₀ and a trailing edge at time t₂ and the response signal waveform 351 may comprise a respective waveform peak at time t₁ and at time t₃. As exemplified in connection with figure 1, a positive correspondence may be determined in a case where a time difference t₃-t₁ is, within a reasonable error of margin, equal to a time difference t₂-t₀. A positive correspondence may alternatively be determined in a case where a time difference t₁-t₀ and/or a time difference t₃-t₂ is within a reasonable error of margin.

In the determining step S204 and wherein the predetermined impulse waveform 301 comprises an encoded pattern 311, the determining whether a response signal waveform 351 from the microphone 102 corresponds to the predetermined impulse waveform 301 may comprise determining S221 that the response signal waveform 351 comprises the encoded pattern 311. For example, the encoded pattern 311 may be a sequence of a predetermined number of impulses delimited by a respective predetermined time interval 360.

Such an example is schematically illustrated in figures 4a and 4b. The predetermined impulse waveform 301 in figure 4a comprises three square waves having leading and trailing edges at times t₀, t₂, t₄, t₆, t₈ and t₁₀. The response signal waveform 351 is characterized by waveform peaks at times t₁, t₃, t₅, t₇, t₉ and t₁₁. An encoded pattern may then be defined by predetermined time intervals between the times of the leading edges at t₀, t₄ and t₈. A positive determination that the response signal waveform 351 corresponds to the predetermined impulse waveform 301 may, e.g., then be when the time difference t₅-t₁ corresponds to t₄-t₀ and time difference t₉-t₅ corresponds to t₈-t₄.

As exemplified in figures 3a-b and figures 4a-b, the predetermined impulse waveform 301 may comprise a square waveform. However, other waveforms may be used, for example a more complex waveform may be used in order to optimize the electric/mechanical interaction within the piezoelectric component 104. In such examples, the response signal waveform 351 will also be more complex than the schematically exemplified waveform 351.

In some embodiments, the method comprises a registering step 200 during which registering of an audio signal from the microphone 102 takes place and the audio signal is provided to an audio signal receiver 131. In such embodiments, the method may comprise, prior to the step S202 of transmitting the predetermined impulse waveform 301 to the piezoelectric component 104, a step S201 of initiating provision of a temporary replacement audio signal. In these embodiments, the method also comprises, after the determining step S204 of determining whether a response signal waveform 351 from the microphone 102 corresponds to the predetermined impulse waveform 301, a resumption step S205 of resuming the provision of the audio signal to the audio signal receiver 131.

The temporary replacement audio signal may be a computed extrapolation or interpolation of the audio signal provided to the audio signal receiver 131 prior to the initiation of provision of the temporary replacement audio signal. Alternatively, the temporary replacement audio signal may be a difference audio signal computed by subtracting a predetermined response signal waveform from the response signal waveform 351 from the microphone 102.

In other words, the provision of the audio signal to the audio signal receiver 131 during the procedure of inducing the mechanical impulse in the piezoelectric component 104 is changed in that a replacement audio signal is provided instead. This means that the audio signal receiver 131, being an automated system or a human operator, is alleviated of any discomfort of hearing a noise that is characteristic of the reaction by the microphone 102 to the predetermined impulse waveform 301.

The person skilled in the art realizes that the present invention by no means is limited to the preferred embodiments described above. On the contrary, many modifications and variations are possible within the scope of the appended claims.

## Claims

1. A method for determining a status of a microphone (102), the method comprising:
- registering (200) an audio signal from the microphone (102) and providing the audio signal to an audio signal receiver (131);
- providing (S201), while registering (200) the audio signal from the microphone (102) and while providing the audio signal to an audio signal receiver (131), a temporary replacement audio signal to the audio signal receiver (131);
- transmitting (S202) a predetermined impulse waveform (301) to a piezoelectric component (104), the piezoelectric component (104) being located in a vicinity of the microphone (102) and arranged in mechanical connection with the microphone (102), to induce a mechanical impulse in the piezoelectric component (104);
- determining (S204) whether a response signal waveform (351) from the microphone (102) corresponds to the predetermined impulse waveform (301);
- resuming (S205) the provision of the audio signal to the audio signal receiver (131), and
- upon the response signal waveform (351) from the microphone (102) corresponding to the predetermined impulse waveform (301), determining that the status of the microphone (102) is operational.

2. The method of claim 1, wherein determining whether a response signal waveform (351) from the microphone (102) corresponds to the predetermined impulse waveform (301) comprises:
- determining (S211) that a timing difference between the response signal waveform (351) and the predetermined impulse waveform (301) is within a predetermined timing difference interval.

3. The method of claim 1, wherein the predetermined impulse waveform (301) comprises an encoded pattern (311), and wherein determining whether a response signal waveform (351) from the microphone (102) corresponds to the predetermined impulse waveform (301) comprises:
- determining (S221) that the response signal waveform (351) comprises the encoded pattern (311).

4. The method of claim 3, wherein the encoded pattern (311) is a sequence of a predetermined number of impulses delimited by a respective predetermined time interval (360).

5. The method of any one of claims 1 to 4, wherein the predetermined impulse waveform (301) comprises a square waveform.

6. The method of any one of claims 1 to 5, wherein the temporary replacement audio signal is a computed extrapolation or interpolation of the audio signal provided to the audio signal receiver (131) prior to the initiation of provision of the temporary replacement audio signal.

7. The method of any one of claims 1 to 5, wherein the temporary replacement audio signal is a difference audio signal computed by subtracting a predetermined response signal waveform from the response signal waveform (351) from the microphone (102).

8. A non-transitory computer-readable storage medium having stored thereon instructions for implementing the method according to any one of claims 1-7, when executed on a device having processing capabilities.

9. A device (100) comprising circuitry (101), a microphone (102) and a piezoelectric component (104), the piezoelectric component (104) and the microphone being located in a vicinity of and in mechanical connection with each other, the circuitry (101) being connected to the microphone (102) and connected to the piezoelectric component (104), where the circuitry (101) is configured to execute:
- registering of an audio signal from the microphone (102) and providing the audio signal to an audio signal receiver (131);
- provision, while registering (200) the audio signal from the microphone (102) and while providing the audio signal to an audio signal receiver (131), of a temporary replacement audio signal to the audio signal receiver (131);
- a transmitting function (122) configured to transmit a predetermined impulse waveform (301) to the piezoelectric component (104) to induce a mechanical impulse in the piezoelectric component (104);
- a response determining function (124) configured to determine whether a response signal waveform (351) from the microphone (102) corresponds to the predetermined impulse waveform (301);
- resumption of the provision of the audio signal to the audio signal receiver (131), and
- upon the response signal waveform (351) from the microphone (102) corresponding to the predetermined impulse waveform (301), determine that the status of the microphone (102) is operational.

10. The device of claim 9, where the piezoelectric component (104) is any of a multi-layer ceramic capacitor, MLCC, and a piezoelectric actuator made of lead zirconate titanate PZT.

11. The device of any one of claims 9 to 10, comprising a printed circuit board, PCB, (103) and where the microphone (102) and the piezoelectric component (104) are both attached to the PCB (103) in the vicinity of each other.

## Patentansprüche

1. Verfahren zum Bestimmen eines Status eines Mikrofons (102), wobei das Verfahren Folgendes umfasst:
- Registrieren (200) eines Audiosignals aus dem Mikrofon (102) und Bereitstellen des Audiosignals an einen Audiosignalempfänger (131);
- Bereitstellen (S201), während des Registrierens (200) des Audiosignals aus dem Mikrofon (102) und während des Bereitstellens des Audiosignals an einen Audiosignalempfänger (131), eines temporären Ersatzaudiosignals an den Audiosignalempfänger (131);
- Übertragen (S202) einer vorbestimmten Impulswellenform (301) an eine piezoelektrische Komponente (104), wobei sich die piezoelektrische Komponente (104) in einer Nähe des Mikrofons (102) befindet und in mechanischer Verbindung mit dem Mikrofon (102) angeordnet ist, um einen mechanischen Impuls in der piezoelektrischen Komponente (104) zu induzieren;
- Bestimmen (S204), ob eine Antwortsignalwellenform (351) aus dem Mikrofon (102) der vorbestimmten Impulswellenform (301) entspricht;
- Wiederaufnehmen (S205) der Bereitstellung des Audiosignals an den Audiosignalempfänger (131), und
- wenn die Antwortsignalwellenform (351) aus dem Mikrofon (102) der vorbestimmten Impulswellenform (301) entspricht, Bestimmen, dass der Status des Mikrofons (102) betriebsbereit ist.

2. Verfahren nach Anspruch 1, wobei das Bestimmen, ob eine Antwortsignalwellenform (351) aus dem Mikrofon (102) der vorbestimmten Impulswellenform (301) entspricht, Folgendes umfasst:
- Bestimmen (S211), dass eine Zeitdifferenz zwischen der Antwortsignalwellenform (351) und der vorbestimmten Impulswellenform (301) innerhalb eines vorbestimmten Zeitdifferenzintervalls liegt.

3. Verfahren nach Anspruch 1, wobei die vorbestimmte Impulswellenform (301) ein codiertes Muster (311) umfasst und wobei das Bestimmen, ob eine Antwortsignalwellenform (351) aus dem Mikrofon (102) der vorbestimmten Impulswellenform (301) entspricht, Folgendes umfasst:
- Bestimmen (S221), dass die Antwortsignalwellenform (351) das codierte Muster (311) umfasst.

4. Verfahren nach Anspruch 3, wobei das codierte Muster (311) eine Sequenz einer vorbestimmten Anzahl von Impulsen ist, die durch ein jeweiliges vorbestimmtes Zeitintervall (360) abgegrenzt sind.

5. Verfahren nach einem der Ansprüche 1 bis 4, wobei die vorbestimmte Impulswellenform (301) eine Rechteckwellenform umfasst.

6. Verfahren nach einem der Ansprüche 1 bis 5, wobei das temporäre Ersatzaudiosignal eine berechnete Extrapolation oder Interpolation des Audiosignals ist, das dem Audiosignalempfänger (131) vor dem Einleiten der Bereitstellung des temporären Ersatzaudiosignals bereitgestellt wird.

7. Verfahren nach einem der Ansprüche 1 bis 5, wobei das temporäre Ersatzaudiosignal ein Differenzaudiosignal ist, das durch Subtrahieren einer vorbestimmten Antwortsignalwellenform von der Antwortsignalwellenform (351) aus dem Mikrofon (102) berechnet wird.

8. Nichtflüchtiges, computerlesbares Speichermedium, auf dem Anweisungen zum Implementieren des Verfahrens nach einem der Ansprüche 1-7 gespeichert sind, wenn diese auf einer Vorrichtung mit Verarbeitungsfähigkeiten ausgeführt werden.

9. Vorrichtung (100), die Beschaltung (101), ein Mikrofon (102) und eine piezoelektrische Komponente (104) umfasst, wobei sich die piezoelektrische Komponente (104) und das Mikrofon in einer gegenseitigen Nähe und in mechanischer Verbindung miteinander befinden, wobei die Beschaltung (101) mit dem Mikrofon (102) verbunden ist und mit der piezoelektrischen Komponente (104) verbunden ist, wobei die Beschaltung (101) dazu konfiguriert ist, Folgendes auszuführen:
- Registrieren eines Audiosignals aus dem Mikrofon (102) und Bereitstellen des Audiosignals an einen Audiosignalempfänger (131);
- Bereitstellen, während des Registrierens (200) des Audiosignals aus dem Mikrofon (102) und während des Bereitstellens des Audiosignals an einen Audiosignalempfänger (131), eines temporären Ersatzaudiosignals an den Audiosignalempfänger (131);
- eine Übertragungsfunktion (122), die dazu konfiguriert ist, eine vorbestimmte Impulswellenform (301) an die piezoelektrische Komponente (104) zu übertragen, um einen mechanischen Impuls in der piezoelektrischen Komponente (104) zu induzieren;
- eine Antwortbestimmungsfunktion (124), die dazu konfiguriert ist, zu bestimmen, ob eine Antwortsignalwellenform (351) aus dem Mikrofon (102) der vorbestimmten Impulswellenform (301) entspricht;
- Wiederaufnehmen der Bereitstellung des Audiosignals an den Audiosignalempfänger (131), und
- wenn die Antwortsignalwellenform (351) aus dem Mikrofon (102) der vorbestimmten Impulswellenform (301) entspricht, Bestimmen, dass der Status des Mikrofons (102) betriebsbereit ist.

10. Vorrichtung nach Anspruch 9, wobei die piezoelektrische Komponente (104) eine beliebige ist von einem mehrschichtigen Keramikkondensator (Multilayer Ceramic Capacitor, MLCC) und einem piezoelektrischen Aktor aus Blei-Zirkonat-Titanat (PZT).

11. Vorrichtung nach einem der Ansprüche 9 bis 10, umfassend eine Leiterplatte (Printed Circuit Board, PCB) (103) und wobei das Mikrofon (102) und die piezoelektrische Komponente (104) beide in gegenseitiger Nähe an der PCB (103) angebracht sind.

## Revendications

1. Procédé pour déterminer l'état d'un microphone (102), le procédé comprenant les étapes suivantes :
- enregistrer (200) un signal audio provenant du microphone (102) et fournir le signal audio à un récepteur de signal audio (131) ;
- fournir (S201), tout en enregistrant (200) le signal audio provenant du microphone (102) et tout en fournissant le signal audio à un récepteur de signal audio (131), un signal audio de remplacement temporaire au récepteur de signal audio (131) ;
- transmettre (S202) une forme d'onde d'impulsion prédéterminée (301) à un composant piézoélectrique (104), le composant piézoélectrique (104) étant situé à proximité du microphone (102) et agencé en connexion mécanique avec le microphone (102), pour induire une impulsion mécanique dans le composant piézoélectrique (104) ;
- déterminer (S204) si une forme d'onde de signal de réponse (351) provenant du microphone (102) correspond à la forme d'onde d'impulsion prédéterminée (301) ;
- reprendre (S205) la fourniture du signal audio au récepteur de signal audio (131), et
- lorsque la forme d'onde du signal de réponse (351) provenant du microphone (102) correspond à la forme d'onde d'impulsion prédéterminée (301), déterminer que le microphone (102) est opérationnel.

2. Procédé selon la revendication 1, dans lequel la détermination du fait qu'une forme d'onde de signal de réponse (351) provenant du microphone (102) corresponde, ou non, à la forme d'onde d'impulsion prédéterminée (301) comprend l'étape suivante :
- déterminer (S211) qu'une différence de synchronisation entre la forme d'onde de signal de réponse (351) et la forme d'onde d'impulsion prédéterminée (301) se situe dans un intervalle de différence de synchronisation prédéterminé.

3. Procédé selon la revendication 1, dans lequel la forme d'onde d'impulsion prédéterminée (301) comprend un motif codé (311), et dans lequel la détermination qu'une forme d'onde de signal de réponse (351) provenant du microphone (102) corresponde, ou non, à la forme d'onde d'impulsion prédéterminée (301) comprend l'étape suivante :
- déterminer (S221) que la forme d'onde du signal de réponse (351) comprend le motif codé (311).

4. Procédé selon la revendication 3, dans lequel le motif codé (311) est une séquence d'un nombre prédéterminé d'impulsions délimitées par un intervalle de temps prédéterminé respectif (360).

5. Procédé selon l'une quelconque des revendications 1 à 4, dans lequel la forme d'onde d'impulsion prédéterminée (301) comprend une forme d'onde carrée.

6. Procédé selon l'une quelconque des revendications 1 à 5, dans lequel le signal audio de remplacement temporaire est une extrapolation ou une interpolation calculée du signal audio fourni au récepteur de signal audio (131) avant le début de la fourniture du signal audio de remplacement temporaire.

7. Procédé selon l'une quelconque des revendications 1 à 5, dans lequel le signal audio de remplacement temporaire est un signal audio de différence calculé en soustrayant une forme d'onde de signal de réponse prédéterminée de la forme d'onde de signal de réponse (351) provenant du microphone (102).

8. Support de stockage non transitoire lisible par ordinateur sur lequel sont stockées des instructions permettant, lorsqu'elles s'exécutent sur un dispositif doté de capacités de traitement, la mise en œuvre du procédé selon l'une quelconque des revendications 1 à 7.

9. Dispositif (100) comprenant des circuits (101), un microphone (102) et un composant piézoélectrique (104), le composant piézoélectrique (104) et le microphone étant situés à proximité l'un de l'autre et en connexion mécanique l'un avec l'autre, les circuits (101) étant connectés au microphone (102) et connectés au composant piézoélectrique (104), où les circuits (101) sont configurés pour exécuter les étapes suivantes :
- l'enregistrement d'un signal audio provenant du microphone (102) et la fourniture du signal audio à un récepteur de signal audio (131) ;
- la fourniture, tout en enregistrant (200) le signal audio provenant du microphone (102) et tout en fournissant le signal audio à un récepteur de signal audio (131), d'un signal audio de remplacement temporaire au récepteur de signal audio (131) ;
- une fonction de transmission (122) configurée pour transmettre une forme d'onde d'impulsion prédéterminée (301) au composant piézoélectrique (104) afin d'induire une impulsion mécanique dans le composant piézoélectrique (104) ;
- une fonction de détermination de réponse (124) configurée pour déterminer si une forme d'onde de signal de réponse (351) provenant du microphone (102) correspond à la forme d'onde d'impulsion prédéterminée (301) ;
- la reprise de la fourniture du signal audio au récepteur de signal audio (131), et
- lorsque la forme d'onde du signal de réponse (351) provenant du microphone (102) correspond à la forme d'onde d'impulsion prédéterminée (301), la détermination que le microphone (102) est opérationnel.

10. Dispositif selon la revendication 9, dans lequel le composant piézoélectrique (104) est l'un quelconque parmi un condensateur céramique multicouche, MLCC, et un actionneur piézoélectrique en titanate-zirconate de plomb, PZT.

11. Dispositif selon l'une quelconque des revendications 9 et 10, comprenant une carte de circuit imprimé, PCB, (103) et dans lequel le microphone (102) et le composant piézoélectrique (104) sont tous deux fixés à la PCB (103) à proximité l'un de l'autre.
